# DEMANDE DE BREVET EUROPEEN

(11) **EP 0 644 337 A1**
(43) Date de publication de la demande: **22.03.1995**
(21) Numéro de dépôt: 94430008.6
(22) Date de dépôt: 19.09.1994
(51) Int. Cl.: F16B 5/00, E04B 1/61, E04D 3/38

(54) **Procédé et dispositif de jonction étanche de panneaux sandwich**

(30) Priorité: 21.09.1993 FR 9311531
(71) Demandeur: HOLDING DURANCE LUBERON S.A.R.L., FR-84120 Pertuis (FR)
(72) Inventeur: Motte, Jean-Paul, F-84240 Ansuis (FR); Pisano, Jean-Marie, F-84120 Pertuis (FR)
(74) Mandataire: Marek, Pierre

(57) **Abrégé**

Procédé de jonction étanche de panneaux sandwich appelés à être exposés au ruissellement et comprenant une âme (1) en mousse rigide de matière plastique disposée entre deux parements rigides (2,3), caractérisé en ce que l'on dispose, dans des rainures longitudinales (4) ménagées dans les côtés d'assemblage desdits panneaux (A1, A2), par exemple constituées par des saignées pratiquées dans l'âme (1) de ces derniers, des profilés d'habillage de chant (7) comportant une gorge longitudinale (8) dont le fond présente au moins un canal de drainage (9) comportant une ouverture longitudinale (17) débouchant dans ladite gorge (8), les panneaux (A1, A2) ainsi équipés étant assemblés au moyen d'un profilé de jonction (18) en forme de gouttière, que l'on encastre, par l'intermédiaire de ses côtés longitudinaux, dans les gorges longitudinales (8) des profilés d'habillage de chant (7) et que l'on dispose de manière que ses faces latérales longitudinales (24) aboutissent, respectivement, à l'entrée de l'ouverture longitudinale (17) des canaux de drainage (9).

## Description

La présente invention concerne un procédé et un dispositif de jonction étanche de panneaux sandwich exposés au ruissellement tels que, par exemple, les panneaux composites constituant les couvertures de vérandas, de terrasses, de toitures, de balcons, de galeries, les panneaux de bardages, etc, ces panneaux comportant une âme en mousse rigide de matière plastique disposée entre deux parements rigides. D'une manière générale, l'invention est avantageusement applicable à la réalisation de surfaces ou parois ayant des fonctions diverses les exposant au ruissellement, ces surfaces ou parois pouvant être disposées horizontalement, plus ou moins inclinées, ou dressées verticalement.

Dans le document EP-A-0.354.149, sont décrits et illustrés un procédé et un dispositif de jonction étanche de panneaux sandwich suivant lesquels les panneaux dont les chants sont pourvus d'une saignée longitudinale ménagée dans leur âme en mousse rigide, sont juxtaposés et assemblés au moyen d'une gouttière de jonction que l'on encastre, par l'intermédiaire de ses côtés opposés, dans les saignées de deux panneaux accolés, cette gouttière de jonction étant constituée par un profilé comportant un canal s'étendant d'un bout à l'autre dudit profilé et une ouverture médiane longitudinale débouchant dans ledit canal et orientée vers l'extérieur, cette ouverture étant disposée dans le plan d'un interstice ménagé entre lesdits panneaux accolés.

De la sorte, le profilé de jonction des panneaux forme une gouttière qui peut recevoir l'eau de ruissellement qui s'infiltre ou s'écoule entre lesdits panneaux et qui permet d'acheminer l'eau recueillie en direction du bord inférieur de la couverture ou autre surface ou paroi ainsi réalisée. On assure de la sorte une jonction étanche des panneaux composites.

Ce procédé et ce dispositif ont toutefois pour inconvénient de créer des ponts thermiques constitués par l'étroite portion médiane du fond de la gouttière de jonction qui se trouve placée dans l'interstice séparant les panneaux composites assemblés. Ces ponts thermiques indésirables pour une bonne isolation, favorisent en outre le phénomène de condensation et la formation de gouttelettes sous la couverture.

Pour supprimer cet inconvénient, on a créé un dispositif et un procédé décrits dans le document EP-A-0.562.987 et suivant lesquels l'assemblage des panneaux composites isolants est réalisé au moyen d'une fausse languette ou élément de jonction composite dont la partie externe ou partie supérieure est constituée par un profilé comportant un canal s'étendant d'un bout à l'autre dudit profilé et une ouverture médiane longitudinale débouchant dans ledit canal, et dont la partie interne ou face inférieure est constituée par une semelle ou garniture isolante disposée contre la face interne ou inférieure dudit profilé, et possédant un pouvoir d'isolation thermique supérieur à celui du matériau dans lequel est exécuté ledit profilé.

Grâce au procédé et au dispositif de l'invention, on supprime les ponts thermiques et la formation de gouttelettes d'eau sous les couvertures, tout en assurant la jonction étanche des panneaux.

Les dispositifs de jonction décrits dans les documents EP-A-0.354.149 et EP-A-0.562.987 constituent des barrières d'étanchéité à l'eau efficaces. Toutefois, les exigences des nouvelles règles et normes applicables à la construction, dans le domaine de l'étanchéité, ont conduit à l'étude de systèmes susceptibles de réaliser une double barrière d'étanchéité à l'eau.

L'invention concerne un procédé et un dispositif de jonction étanche de panneaux sandwich permettant de créer une double barrière aux infiltrations d'eau, dans tous les cas d'exposition desdits panneaux au ruissellement, quelles que soient la durée et l'importance de ce dernier.

D'autre part, les parements ou peaux des panneaux comportent généralement des bords pliés et rabattus contre les chants longitudinaux de leur âme en mousse rigide, sur une partie de l'épaisseur de ces derniers, afin de protéger les arêtes de ladite âme, et ces panneaux sont obtenus, en fonction des besoins, par le tronçonnement de plaques de grande longueur préparées à l'avance. Dans ces conditions, on ne peut réaliser, pratiquement, que des couvertures résultant de l'assemblage de panneaux rectangulaires. En effet, si l'on découpe des panneaux triangulaires pour réaliser des surfaces présentant un bord polygonal, par exemple octogonal, décagonal, dodécagonal, etc, les côtés de ces panneaux triangulaires sont dépourvus de retombées de protection de sorte que leur jonction pose des problèmes d'étanchéité non résolus de manière satisfaisante.

L'invention vise également à supprimer cet important inconvénient.

Le procédé et le dispositif de l'invention sont notamment remarquables par le fait que l'on dispose, dans les rainures longitudinales des panneaux sandwich, par exemple constituées par des saignées ménagées dans l'âme desdits panneaux, des profilés d'habillage de chant comportant une gorge longitudinale dont le fond présente au moins un canal de drainage comportant une ouverture longitudinale débouchant dans ladite gorge, les panneaux ainsi équipés étant assemblés au moyen d'un profilé de jonction en forme de gouttière, encastré, par l'intermédiaire de ses côtés longitudinaux, dans les gorges longitudinales des profilés d'habillage de chant, et disposé de manière que ses faces latérales longitudinales aboutissent, respectivement, à l'entrée de l'ouverture longitudinale des canaux de drainage.

De la sorte, l'eau qui peut s'infiltrer ou s'écouler entre les panneaux assemblés, est recueillie par la gouttière constituant le profilé de jonction et acheminée par cette dernière en direction du bord inférieur de la couverture ou autre surface d'où elle est évacuée par les moyens habituels.

Si pour une cause quelconque, l'eau passe par dessus les bords de la gouttière et retombe à l'extérieur de celle-ci, elle se trouve recueillie par les canaux de drainage et acheminée par ces derniers en direction du bord inférieur de la couverture. Toute infiltration d'eau aux emplacements de jonction des panneaux est ainsi rendue impossible.

Les buts, caractéristiques et avantages ci-dessus, et d'autres encore, ressortiront mieux de la description qui suit et des dessins annexés dans lesquels :

La figure 1 est une vue partielle éclatée, en perspective, montrant les bords adjacents de deux panneaux isolants et le dispositif de jonction permettant leur assemblage étanche et isolant, selon le procédé de l'invention.

La figure 2 est une vue en coupe transversale d'un panneau sandwich du genre utilisé pour constituer des couvertures de vérandas ou autres parois, équipé de profilés d'habillage de chant.

La figure 3 est une vue en coupe transversale et à plus grande échelle d'un profilé d'habillage de chant.

La figure 4 est une vue en coupe transversale et à plus grande échelle, du profilé de jonction.

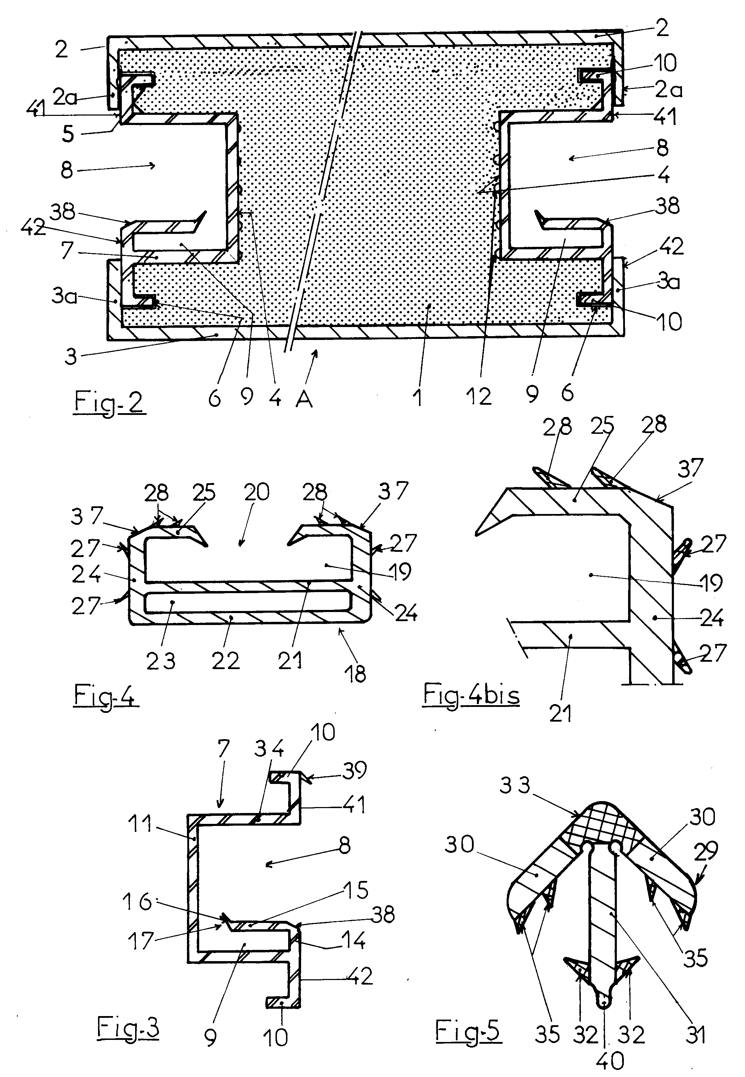

La figure 4 bis est une vue de détail, à plus grande échelle, de la figure 4.

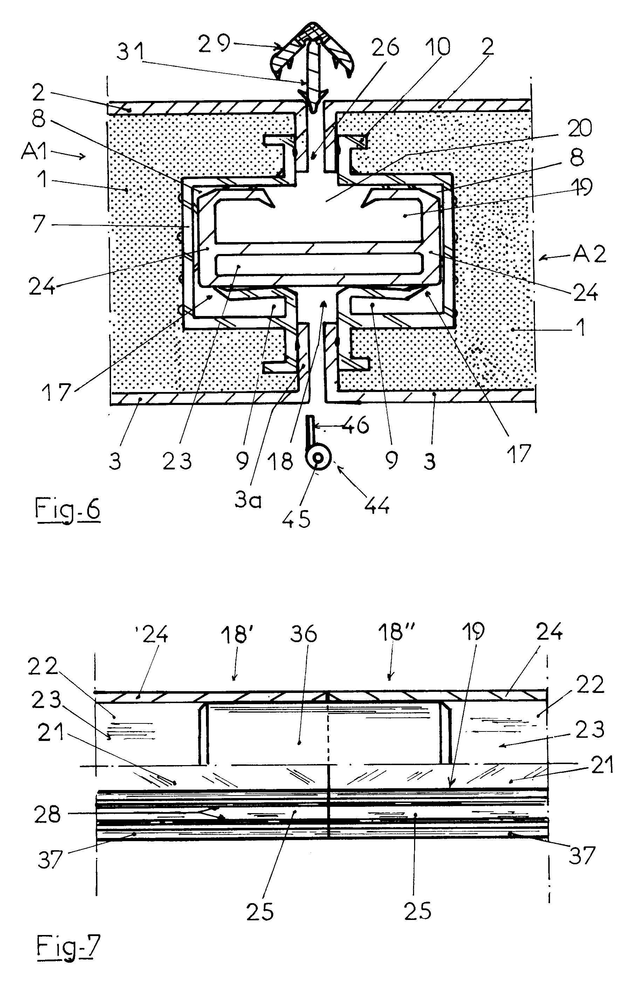

La figure 5 est une vue en coupe transversale et à plus grande échelle, d'un profilé de faîtage ou couvertine.

La figure 6 est une vue en coupe transversale montrant les bords adjacents de deux panneaux assemblés au moyen du procédé et du dispositif selon l'invention.

La figure 7 est une vue en plan avec demi-coupe longitudinale, montrant l'aboutement de deux portions de profilé de jonction.

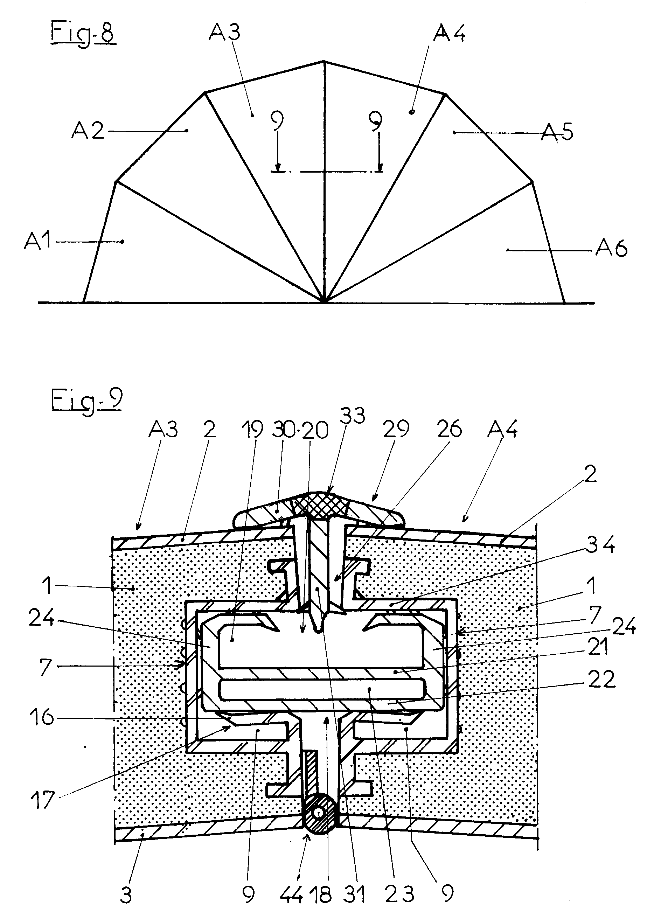

La figure 8 est une vue en plan et à caractère schématique d'une véranda comportant un bord demi-dodécagonal.

La figure 9 est une vue à plus grande échelle et en coupe suivant la ligne 9-9 de la figure 8, montrant l'assemblage de deux panneaux triangulaires dont les chants adjacents sont dépourvus de retombées des revêtements ou parements.

On se reporte auxdits dessins pour décrire des exemples de mise en oeuvre intéressants, quoique nullement limitatifs, du procédé et du dispositif selon l'invention.

Ce procédé et ce dispositif sont destinés à permettre la jonction étanche et isolante de plaques ou panneaux isolants de dimensions et nature diverses, dont les applications sont nombreuses telles que toitures de vérandas ou autres constructions, planchers spéciaux, cloisons isolantes, bardages isolants, carrosseries isolées, panneaux publicitaires, etc.

On a représenté, sur les dessins, une application très intéressante de l'invention à l'assemblage étanche de panneaux A1, A2 de type "sandwich" principalement constitués d'une âme 1 en mousse rigide de matière plastique telle que mousse de polyuréthanne, mousse de chlorure de polyvinyle, polystyrène extrudé, etc, disposée entre deux peaux ou parements rigides 2, 3, par exemple formés par des plaques d'acier ou d'aluminium laquées ou recouvertes de tout autre revêtement convenable. Les parements 2, 3, pourraient être exécutés en tout autre matériau rigide adéquat tel que polyester armé ou autre.

Dans les chants des côtés d'assemblage des panneaux A, est ménagée une rainure 4, ayant de préférence une section rectangulaire ou carrée. Compte tenu du mode d'utilisation le plus courant des panneaux, les rainures 4 sont généralement ménagées dans les chants longitudinaux opposés desdits panneaux. De manière avantageuse, les rainures 4 sont constituées par des saignées pratiquées dans l'âme 1 des panneaux A.

De chaque côté des rainures 4 et parallèlement à celles-ci sont, de préférence, prévues des fentes 5, 6 ayant une profondeur sensiblement plus réduite que celle desdites rainures.

Dans chaque rainure 4 est encastré un profilé d'habillage de chant 7 qui peut être exécuté en toute matière plastique rigide convenable telle que chlorure de polyvinyle (P.V.C.), ou en aluminium ou autre métal inaltérable.

Ce profilé 7 comporte une gorge 8 ayant par exemple une section rectangulaire ou carrée et dans le fond de laquelle est ménagé un canal de drainage 9.

De chaque coté de la gorge 8, le profilé 7 comporte, de préférence, des languettes d'ancrage longitudinales 10 dirigées vers l'arrière. Ces languettes sont destinées à être insérées dans les fentes 5, 6 des panneaux, afin d'améliorer la solidité de la fixation des profilés 7 dans les rainures 4 laquelle peut être assurée par collage. Dans ce cas, la face externe de la paroi postérieure 11 des profilés 7 ou le fond des rainures 4, peut être pourvu de stries 12 ou autres aspérités permettant de renforcer la résistance du collage.

Les parements 2, 3 ont des bords 2a, 3a, pliés et rabattus contre les chants 1a de l'âme rigide 1 et contre une portion au moins des surfaces de chant planes 41, 42 des profilés d'habillage de chant 7 disposées de chaque côté de la partie centrale de ces derniers et alignées avec les surfaces de chant apparentes de ladite âme 1.

Le canal de drainage 9 est délimité par le fond 13 de la gorge, par la paroi postérieure 11 du profilé, et par une paroi frontale 14 parallèle à ladite paroi postérieure 11 et présentant une largeur beaucoup plus réduite que celle de cette dernière, afin de laisser subsister une large ouverture d'accès à la gorge 8.

De manière avantageuse, le sommet de la paroi 14 est raccordé à un rebord d'appui 15 s'étendant en direction du fond de la gorge 8 et dont le bord libre 16 se trouve disposé à distance de la paroi postérieure 11 du profilé 7, de sorte qu'une ouverture longitudinale 17 d'accès au canal de drainage 9, se trouve ménagée sur toute la longueur dudit profilé. D'autre part, le bord libre du rebord d'appui peut être constitué par une lèvre longitudinale souple 16 exécutée en matière plastique souple et obtenue par un procédé de co-extrusion connu en soi, lors de la fabrication des profilés.

De préférence, les profilés 7 présentent un chanfrein d'entrée 38 à l'emplacement de la jonction de la paroi frontale 14 et du rebord d'appui 15.

D'autre part, la paroi de chant 41 disposée sur le côté opposé de la gorge 8, est munie d'une lèvre souple d'étanchéité 39.

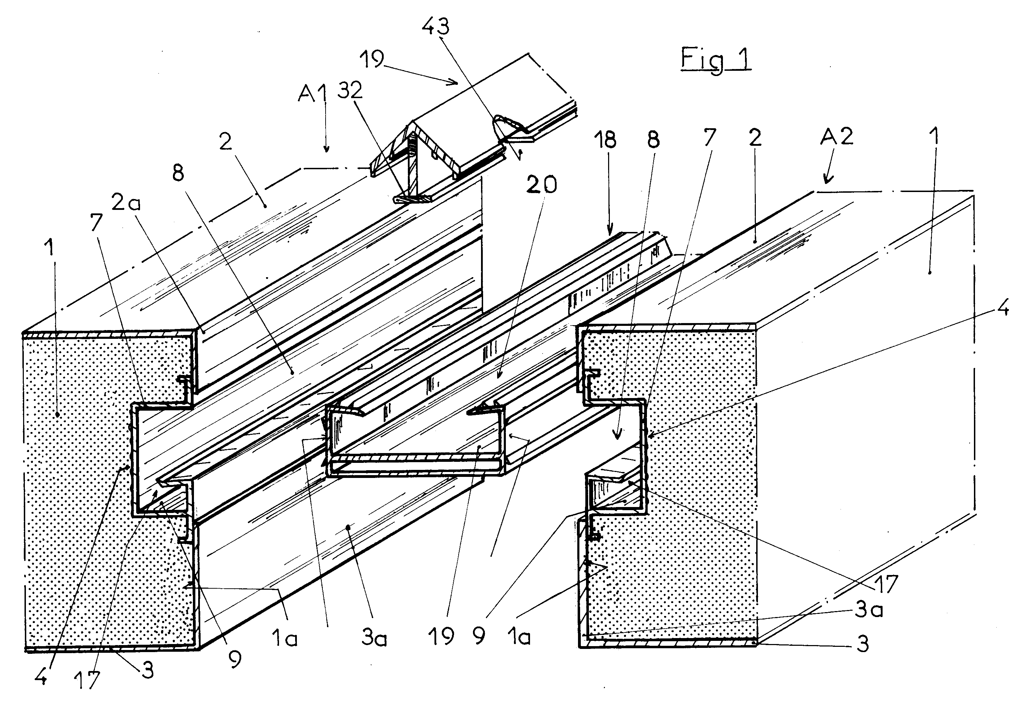

Les figures 1, 6 et 9 montrent des panneaux sandwich A1, A2, munis de profilés d'habillage de chant 7 réalisés selon l'invention.

L'assemblage des panneaux A1, A2 munis des profilés 7, est obtenu au moyen d'un profilé de jonction 18 en forme de gouttière dont la conformation générale peut être similaire à celle du profilé d'assemblage décrit dans le document EP-A-354.149 ou, de préférence, à celle du profilé de jonction décrit dans le document EP-A-0.562.987.

Suivant l'exemple de réalisation illustré, le profilé comprend une partie en forme de gouttière destinée à être placée en direction de l'extérieur et une semelle isolante destinée à être disposée en direction de l'intérieur.

La partie externe comporte un canal longitudinal 19 s'étendant sur toute la longueur du profilé 18, et une ouverture médiane longitudinale 20, opposée au fond 21 dudit canal et débouchant dans ce dernier.

La semelle isolante est constituée par deux parois 21, 22 comprenant le fond 21 du canal 19, entre lesquelles est ménagé un espace 23 pour la création d'une lame d'air isolante.

L'espace 23 peut, en outre, avantageusement être utilisé pour obtenir l'assemblage de portions de profilé de jonction 18 aboutées.

Dans un but de normalisation, les panneaux et les différents profilés sont en effet réalisés avec une longueur standard, par exemple 750 mm. Il arrive cependant que l'on soit amené à exécuter des couvertures ayant une dimension supérieure ; dans ce cas, on est donc conduit à assembler, par aboutement, des portions de panneaux et de profilés.

Dans le cas du profilé de jonction 18, les portions 18', 18'' de profilés sont aboutées et assemblées au moyen d'une languette de liaison 36 logée et collée, par ses demi-parties opposées, dans les espaces 23 des extrémités aboutées desdites portions de profilé (figure 7). Cette languette de liaison peut être exécutée en P.V.C. ou autre matière plastique rigide convenable.

De manière avantageuse, le profilé de jonction 18 présente, en section, une forme rectangulaire définie par : un fond plat 22, deux parois latérales 24 perpendiculaires audit fond, et deux ailes 25 d'égale largeur, orientées l'une en direction de l'autre et disposées à distance du fond 21 du canal 19, ces ailes rentrantes 25 étant rattachées auxdites parois latérales 24, et leurs bords libres se trouvant séparés par l'ouverture ou fente longitudinale médiane 20 d'accès audit canal 19.

Le profilé de jonction 18 peut être réalisé en toute matière plastique rigide convenable telle que PVC, en aluminium ou tout autre métal inaltérable. Ses angles externes comportent, de préférence, un chanfrein d'entrée 37.

En position fonctionnelle d'assemblage (figure 6), le profilé de jonction 18 se trouve encastré, par l'intermédiaire de ses côtés opposés dans les gorges 8 des profilés d'habillage de chant 7 de deux panneaux adjacents A1, A2, l'ouverture longitudinale 20 du canal 19 étant orientée vers l'extérieur de la construction, c'est-à-dire vers le haut lorsque les panneaux sont appelés à constituer une couverture de toiture. D'autre part, la semelle isolante 21-22-23 se trouve orientée vers l'intérieur, c'est-à-dire vers le bas, dans l'application susmentionnée.

Dans cette position d'assemblage, un interstice longitudinal 26 permettant la dilatation des panneaux A1, A2 se trouve ménagé entre les chants adjacents de ces derniers.

La portion externe ou supérieure de l'interstice 26 débouche dans l'ouverture 20 du canal 19 de l'élément de jonction 18, tandis que sa portion interne ou inférieure est fermée par la semelle isolante 21-22-23 dudit élément.

On précise que la portion inférieure et, surtout, la portion supérieure de l'interstice 26, peuvent être obturées par un joint constitué par un cordon de mastic souple ou par un joint réalisé en tout élastomère approprié aux conditions d'emploi.

On décrit cependant dans la suite du présent exposé, un joint de faîtage qui peut être avantageusement combiné au dispositif de jonction étanche selon l'invention, pour améliorer la protection de l'étanchéité des assemblages.

En position d'assemblage, les côtés longitudinaux du profilé de jonction 18 se trouvent encastrés dans la gorge 8 des profilés d'habillage de chant 7 contigus entre le rebord d'appui 15 et la paroi supérieure délimitant la largeur de ladite gorge, tandis que les faces latérales longitudinales 24 dudit profilé de jonction 18 se trouvent placées contre le fond 11 de la gorge 8 et aboutissent à l'entrée de l'ouverture 17 des canaux de drainage 9 desdits profilés d'habillage de chant 7 (figures 6 et 9).

Afin d'améliorer l'étanchéité entre les côtés du profilé de jonction 18 et les parois délimitant la gorge 8 des profilés d'habillage de chant, la face externe des parois latérales 24 et/ou la face externe des ailes rentrantes 25 sont munies de lèvres longitudinales souples, respectivement 27, 28, par exemple obtenues par un procédé de co-extrusion connu en soi.

D'autre part, dans la position d'assemblage, le bord libre souple 16 du rebord d'appui 15 se trouve pressé contre la face inférieure 22 du profilé de jonction 18, en assurant ainsi l'étanchéité de ce contact.

On comprend que l'eau qui pourrait s'infiltrer à travers l'interstice 26, par suite d'une défaillance du moyen d'étanchéité, se trouve recueillie dans le canal 19 du profilé de jonction 18 et acheminée jusqu'au bord inférieur de la toiture ou autre couverture, de sorte que ledit profilé de jonction constitue une première barrière d'étanchéité à l'eau. Si, pour une raison quelconque, l'eau parvient à s'infiltrer à l'extérieur du profilé de jonction 18, cette eau se trouve recueillie par les canaux de drainage 9 et acheminée jusqu'au bord de la couverture, de sorte que les profilés d'habillage de chant 7 constituent une deuxième barrière d'étanchéité à l'eau, grâce à leur canal de drainage inférieur 9.

Cette double barrière d'étanchéité permet aussi d'envisager l'assemblage de panneaux sandwich dont les chants sont dépourvus de retombées de protection constituées par les bords pliés des parements desdits panneaux.

C'est par exemple le cas lorsqu'on veut assembler des panneaux sandwich découpés en fonction des besoins particuliers, par exemple pour l'exécution de toitures isolantes présentant un bord courbe ou un bord polygonal et constituées par une pluralité de panneaux triangulaires ou approximativement triangulaires A1, A2, A3, A4, A5, A6, ... telles que celle qui est représentée schématiquement à la figure 8.

Dans ce cas, il est cependant préférable de s'opposer à la libre entrée de l'eau dans la gouttière du profilé de jonction et de protéger l'angle supérieur des panneaux exposé aux intempéries.

Pour cela, on utilise selon l'invention, un profilé de faîtage ou couvertine 29. Dans les assemblages de panneaux normaux résultant du tronçonnement de plaques standard, la couvertine 29 n'a pas pour fonction essentielle de réaliser une étanchéité à l'eau, mais plutôt de constituer un profilé de propreté s'opposant à l'entrée des poussières et détritus d'origine diverse, dans la gouttière 18 et dans les canaux de drainage 9.

Cette couvertine 29 comporte deux ailes de recouvrement 30 reliées de manière non rigide, par l'intermédiaire de l'un de leurs bords longitudinaux, à l'un des bords longitudinaux d'une âme 31 avec laquelle elles forment un angle aigu, le bord opposé de ladite âme 31 étant rattaché à la partie médiane d'un patin de blocage souple 32.

Au-dessous du patin de blocage souple 32, la couvertine présente un filet saillant axial 40 formant goutte d'eau et qui peut être constitué par le bord libre de l'âme 31. De préférence, le patin de blocage 32 présente des interruptions 43 à intervalles réguliers (figure 1).

Les ailes de recouvrement 30 et l'âme 31 peuvent être réalisées dans un matériau rigide, tel que, par exemple, PVC ou aluminium, tandis que le patin de blocage 32 et la jonction 33 desdites âme et ailes de recouvrement, sont obtenus dans un matériau souple ou déformable, le profilé ainsi conformé étant réalisé par un procédé connu en soi de co-extrusion de ces matériaux rigides et souples.

La mise en place du profilé de couverture 29 s'opère aisément et quasi instantanément, après assemblage des panneaux A3, A4 au moyen du profilé de jonction 18. Il suffit, en effet, d'engager la base de ce profilé munie du patin de blocage 32, dans la portion supérieure de l'interstice 26, et d'appuyer ensuite sur ledit profilé, jusqu'à ce que ledit patin souple vienne se clipser sous la paroi supérieure 34 délimitant la gorge 8 des profilés d'habillage de chant. En fin de course d'insertion du profilé de couverture, les ailes de recouvrement 30 pivotent vers le haut en restant plaquées, par l'effet d'élasticité de la jonction souple 33, contre les parements 2 des panneaux assemblés et cela quel que soit l'angle que forment entre eux Lesdits panneaux, c'est-à-dire un angle saillant (arrêtier), comme illustré à la figure 9, un angle plat ou un angle rentrant (noue).

La face inférieure des ailes de recouvrement 30 peut être munie d'une ou plusieurs lèvres souples 35 également obtenues par co-extrusion des matériaux constituant le profilé de couverture, afin d'améliorer l'étanchéité de contact desdites ailes de recouvrement et des parements 2 des panneaux assemblés.

Les lèvres souples 27, 28, 35 et 39 dont sont respectivement munis les profilés 18, 29 et 7, ont un angle d'inclinaison, par exemple de l'ordre de 45 à 65 degrés, par rapport aux surfaces à partir desquelles elles s'étendent, permettant d'éviter leur retournement ou torsion en sens contraire, lors de leur mise en place.

La face inférieure des panneaux peut être laissée sans joint apparent.

La portion interne de l'interstice 26 peut aussi être obturée par un couvre-joint 44, par exemple constitué par un petit boudin de matière plastique souple 45 solidaire de l'un des bords lontitudinaux d'une languette semi-rigide 46 comportant au moins une face auto-adhésive permettant sa fixation par collage sur la retombée 3a du parement interne 3 de l'un des panneaux assemblés.

## Revendications

**1. -** Procédé de jonction étanche de panneaux sandwich appelés à être exposés au ruissellement et comprenant une âme (1) en mousse rigide de matière plastique disposée entre deux parements rigides (2,3), caractérisé en ce que l'on dispose, dans des rainures longitudinales (4) ménagées dans les côtés d'assemblage desdits panneaux (A1, A2), par exemple constituées par des saignées pratiquées dans l'âme (1) de ces derniers, des profilés d'habillage de chant (7) comportant une gorge longitudinale (8) dont le fond présente au moins un canal de drainage (9) comportant une ouverture longitudinale (17) débouchant dans ladite gorge (8), les panneaux (A1, A2) ainsi équipés étant assemblés au moyen d'un profilé de jonction (18) en forme de gouttière, que l'on encastre, par l'intermédiaire de ses côtés longitudinaux, dans les gorges longitudinales (8) des profilés d'habillage de chant (7) et que l'on dispose de manière que ses faces latérales longitudinales (24) aboutissent, respectivement, à l'entrée de l'ouverture longitudinale (17) des canaux de drainage (9).

**2. -** Dispositif de jonction étanche de panneaux sandwich appelés à être exposés au ruissellement et comprenant une âme (1) en mousse rigide de matière plastique, disposée entre deux parements rigides (2,3), ces panneaux (A1, A2) comportant des rainures longitudinales (4) ménagées dans leurs côtés d'assemblage, par exemple constituées par des saignées pratiquées dans l'âme (1) desdits panneaux, caractérisé en ce qu'il comprend, d'une part, des profilés d'habillage de chant (7) encastrés ou destinés à être encastrés dans lesdites rainures longitudinales, ces profilés (7) comportant une gorge longitudinale (8) dont le fond présente au moins un canal de drainage (9) comportant une ouverture longitudinale (17) débouchant dans ladite gorge (8), et, d'autre part, un profilé de jonction (18) en forme de gouttière, destiné à être encastré, par l'intermédiaire de ses côtés longitudinaux, dans les gorges longitudinales (8) desdits profilés d'habillage de chant (7) équipant les côtés adjacents de deux panneaux contigus (A1, A2), de manière que ses faces latérales longitudinales (24) aboutissent, respectivement, à l'entrée de l'ouverture longitudinale (17) des canaux de drainage (9).

**3. -** Dispositif de jonction selon la revendication 2, caractérisé en ce que les profilés d'habillage de chant (7) comportent un rebord d'appui rentrant (15) disposé au-dessus du fond (13) du canal de drainage (9), le bord libre de ce rebord d'appui rentrant étant constitué par une lèvre souple d'étanchéité (16).

**4. -** Dispositif de jonction suivant la revendication 2, caractérisé en ce que chaque profilé d'habillage de chant (7) comporte des languettes d'ancrage longitudinales (10) orientées vers l'arrière et disposées de chaque côté de sa portion centrale constituant la gorge d'assemblage (8) et le canal de drainage (9).

**5. -** Dispositif suivant l'une quelconque des revendications 2 à 4, caractérisé en ce que les parements (2, 3) des panneaux (A) comportent des bords (2a, 3a) pliés et rabattus contre au moins une portion des surfaces de chant (41, 42) des profilés d'habillage de chant (7).

**6. -** Dispositif de jonction selon l'une des revendications 2 ou 3, caractérisé en ce que le profilé de jonction (18) présente une section rectangulaire et comporte : un fond plat (21-22), deux parois latérales (24) perpendiculaires audit fond et deux ailes rentrantes (25) d'égale largeur, disposées au-dessus de ce dernier et rattachées auxdites parois latérales (24), les bords internes desdites ailes rentrantes (25) délimitant l'ouverture longitudinale (20) dudit profilé de jonction.

**7. -** Dispositif de jonction suivant la revendication 6, caractérisé en ce que la face externe des ailes rentrantes (25) et/ou des parois latérales (24) du profilé de jonction (18), est pourvue d'au moins une lèvre souple d'étanchéité (28, 27).

**8. -** Dispositif de jonction selon l'une quelconque des revendications 2 à 7, caractérisé en ce que le fond du profilé de jonction (18) est constitué par une semelle isolante (21-22-23).

**9. -** Dispositif de jonction selon la revendication 8, caractérisé en ce que la semelle isolante comprend la paroi constituant le fond (21) du canal (19) du profilé de jonction (18) et une paroi (22) disposée parallèlement audit fond (21) et séparé de ce dernier par un espace vide (23), et en ce que ledit dispositif comprend également des languettes de liaison (36) dimensionnées pour pouvoir être engagées dans ledit espace vide (23) de manière à permettre l'assemblage de deux portions (18', 18'') de profilé de jonction (18) aboutées.

**10. -** Dispositif de jonction suivant la revendication 2, caractérisé en ce qu'il comprend un profilé de faîtage ou couvertine (29) comportant deux ailes de recouvrement (30) dont l'un des bords longitudinaux est rattaché par une liaison souple (33) à l'un des bords longitudinaux d'une âme (31) avec laquelle elles forment un angle aigu, le bord longitudinal opposé de ladite âme étant rattaché à la partie médiane d'un patin de blocage souple (32).

**11. -** Dispositif de jonction selon la revendication 10, caractérisé en ce que la face inférieure des ailes de recouvrement (30) du profilé de couverture (29) est munie d'au moins une lèvre souple d'étanchéité (35).
